# EUROPEAN PATENT APPLICATION

(11) **EP 3 575 044 A2**
(43) Date of publication of application: **04.12.2019**
(21) Application number: 19175911.7
(22) Date of filing: 22.05.2019
(51) Int. Cl.: B25J 9/16

(54) **ROBOT INTERACTION SYSTEM AND METHOD**

(30) Priority: 29.05.2018 GB 201808710
(71) Applicant: Sony Interactive Entertainment Inc., Tokyo 108-0075 (JP)
(72) Inventor: BREUGELMANS, Mark, London, W1F 7LP (GB); FORSTER, Richard James, London, W1F 7LP (GB); ANDALL, Hogarth, London, W1F 7LP (GB); SANDERS, Matthew William, London, W1F 7LP (GB)
(74) Representative: D Young & Co LLP

(57) **Abstract**

A system for generating instructions for a robot, the system comprising one or more cameras operable to capture images of an environment comprising the robot, an illumination identification unit operable to identify an illumination of an object in the captured images, an object identification unit operable to identify an illuminated object, and a robot control unit operable to generate instructions for a robot in dependence upon the output of the object identification unit.

## Description

This disclosure relates to a robot interaction system and method.

In recent years there have been many improvements in the capabilities of robots, such that the range of possible interactions has increased significantly. While this is advantageous in that it greatly increases the number of possible functions that are able to be performed by a robot, the burden upon a designer in programming a robot to perform such a large number and range of functions is increased greatly.

In order to provide a robot that is capable of performing a wide range of functions in a variety of different environments, a robot should be capable of identifying a large number of objects that may be present in any of these environments. In addition to this, the types of interactions that are performed with each of these objects should also be provided to the robot. It may also be considered that it may be advantageous to allow a robot to identify an object based upon sound inputs, either in the context of identifying objects in the environment or in the context of accepting user inputs relating to a particular object.

The use of a large knowledge-base may be disadvantageous in that it is very time-consuming to generate and may require significant memory use, and much of this information may actually never be used. However, such an arrangement may be considered by a user to be a better alternative than that of the robot not being able to function correctly because of insufficient information, such as by not being able to identify an object.

While it is clear that there is a compromise to be found, in which only the minimum amount of information is provided in order to guarantee functionality in a given environment, it may be difficult to establish which information is necessary and which may be omitted. It is therefore difficult to determine which information and functionality should be provided to a robot, and as such it falls upon the developer to over-estimate the amount of functionality that is required so as to ensure that the robot is able to function correctly.

It is in the context of the above problems that the present invention arises.

This disclosure is defined by claims 1 and 13.

Further respective aspects and features of the disclosure are defined in the appended claims.

Embodiments of the present invention will now be described by way of example with reference to the accompanying drawings, in which:
Figure 1 is a schematic diagram showing front and rear elevations of a robot, in accordance with embodiments of the present invention;
Figure 2 is a schematic diagram showing front and rear elevations of points of articulation of a robot, in accordance with embodiments of the present invention;
Figure 3 is a schematic diagram illustrating degrees of freedom at respective points of articulation of a robot, in accordance with embodiments of the present invention;
Figure 4 is a schematic diagram of a control system for a robot, in accordance with embodiments of the present invention;
Figure 5 is a schematic diagram of an interactive robot system in accordance with embodiments of the present invention;
Figure 6 schematically illustrates a robot with imaging and projection capabilities;
Figure 7 schematically illustrates a method for generating instructions for a robot;
Figure 8 schematically illustrates an embodiment in which a robot operates a light emission unit;
Figure 9 schematically illustrates an embodiment in which a user operates a light emission unit; and
Figure 10 schematically illustrates a system for generating instructions for a robot.

A robot platform 100 for implementing embodiments of the present invention may take the form of any suitable robotic device, or simulation of a robotic device, as applicable.

The robot platform may have any suitable physical features. Hence movement, where required, may be achieved by wheels, tracks, articulated limbs, internal mass displacement or any other suitable means. Manipulation, where required, maybe achieved by one or more of a mechanical hand, pincer or any other hooking or gripping system, such as a suction or electromagnetic attachment mechanism or a hook or clip, and any further optional articulation such as one or more jointed arms. Vision, where required, may be achieved by optical camera and/or infra-red camera/detector, mounted on the robot and/or located within the environment navigated by the robot. Other situational awareness systems such as ultrasound echolocation, or detection of metal tracks and/or electrically charged tracks, and proximity systems such as whiskers coupled to sensors, or pressure pads, may also be considered. Control of the robot may be provided by running suitable software instructions on a processor of the robot and/or a processor of a remote computer communicating with the robot, for example via a wireless protocol.

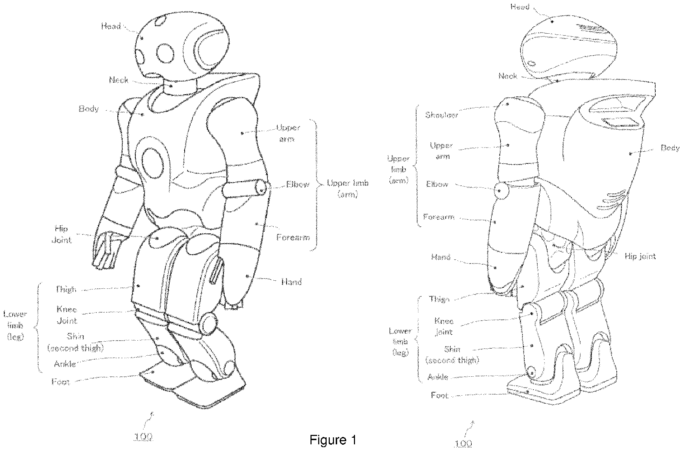

Figure 1 illustrates front and rear views of an exemplary legged locomotive robot platform 100. As shown, the robot includes a body, head, right and left upper limbs, and right and left lower limbs for legged movement. A control unit 80 (not shown in Figure 1) within the body provides a control system for the robot.

Each of the right and left lower limbs includes a thigh, knee joint, second thigh (calf/shin), ankle and foot. The lower limb is coupled by a hip joint to the bottom of the trunk. Each of the right and left upper limb includes an upper arm, elbow joint and forearm. The upper limb is coupled by a shoulder joint to each upper edge of the trunk. Meanwhile, the head is coupled by a neck joint near to the upper end centre of the trunk.

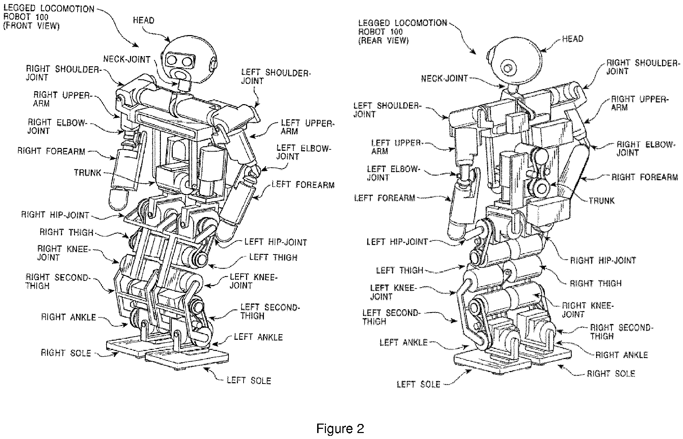

Figure 2 illustrates front and rear views of the robot, showing its points of articulation (other than the hands).

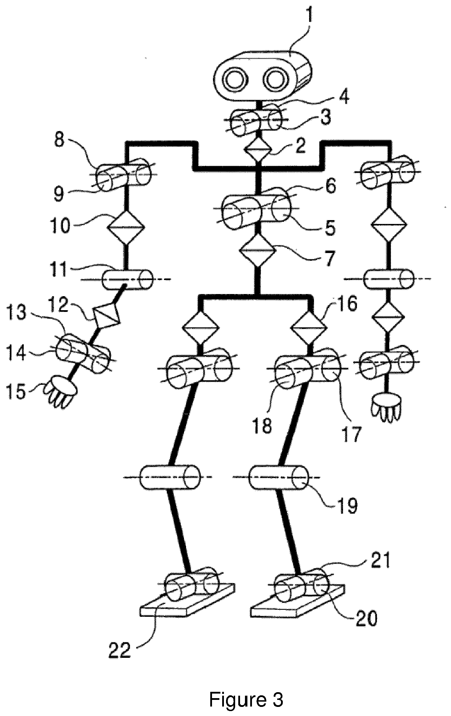

Figure 3 then illustrates the degrees of freedom available for each point of articulation.

Referring to these Figures, a neck joint for supporting the head 1 has 3 degrees of freedom: a neck-joint yaw-axis 2, a neck-joint pitch-axis 3, and a neck-joint roll-axis 4. Meanwhile each arm has 7 degrees of freedom; a shoulder-joint pitch-axis 8, a shoulder-joint roll-axis 9, an upper-arm yaw-axis 10, an elbow-joint pitch-axis 11, a forearm yaw-axis 12, a wrist-joint pitch-axis 13, a wrist-joint roll-axis 14, and a hand 15. Typically the hand 15 also has a multi-joints multi-degrees-of-freedom structure including a plurality of fingers. However, these are omitted for simplicity of explanation. The trunk has 3 degrees of freedom; a trunk pitch-axis 5, a trunk roll-axis 6, and a trunk yaw-axis 7. Each leg constituting the lower limbs has 6 degrees of freedom; a hip-joint yaw-axis 16, a hip-joint pitch-axis 17, a hip-joint roll-axis 18, a knee-joint pitch-axis 19, an ankle-joint pitch-axis 20, an ankle-joint roll-axis 21, and a foot 22. In the exemplary robot platform, the cross point between the hip-joint pitch-axis 17 and the hip-joint roll-axis 18 defines a hip-joint location of the legged walking robot 100 according to the embodiment. Again for simplicity it is assumed that the foot itself has no degrees of freedom, but of course this is non-limiting. As a result the exemplary robot 100 has 32 (= 3 + 7 x 2 + 3 + 6 x 2) degrees of freedom in total. It will be appreciated however that this is merely exemplary, and other robot platforms may have more or fewer degrees of freedom.

Each degree of freedom of the exemplary legged locomotive robot platform 100 is implemented by using an actuator. For example, a small AC servo actuator that is directly coupled to a gear and that houses a one-chip servo-system may be used, although any suitable actuator may be considered, such as a linear servo, electroactive polymer muscle, pneumatic, piezoelectric, or the like.

It will be appreciated that any desired action that the robot platform is capable of may be implemented by control signals issued by a control system to one or more of the actuators of the robot (or to simulated actuators in a simulation, as applicable), to adjust the pose of the robot within its available degrees of freedom.

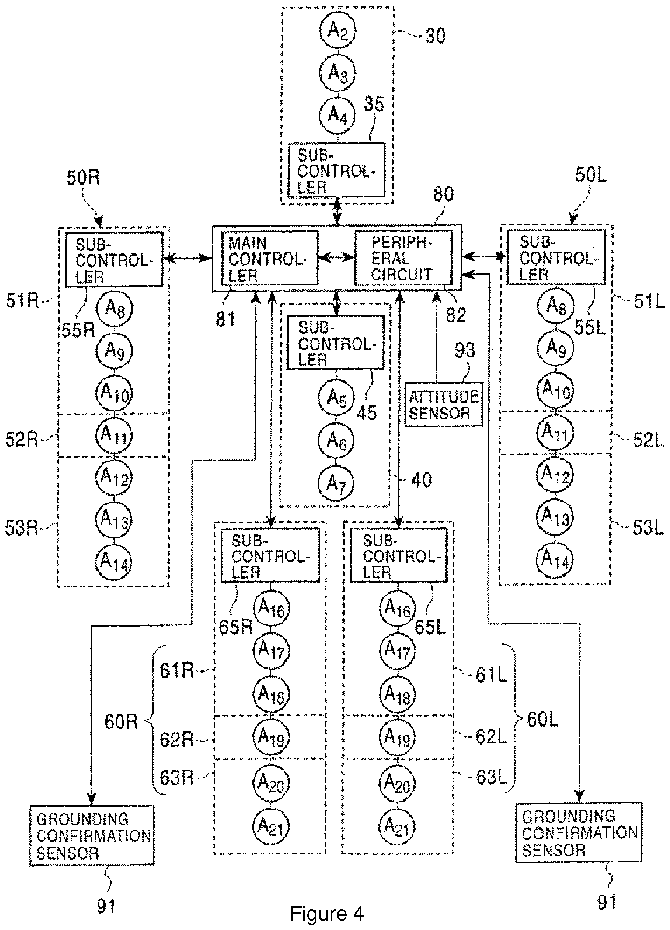

Figure 4 schematically illustrates an exemplary control system for the robot platform 100.

A control unit 80 operates to co-ordinate the overall motion / actions of the robot. The control unit 80 has a main control unit 81 including main circuit components (not shown) such as a CPU (central processing unit) and a memory, and typically a periphery circuit 82 including an interface (not shown) for sending and receiving data and/or commands to and from a power supply circuit (not shown) and each component of the robot. The control unit may comprise a communication interface and communication device for receiving data and/or commands by remote-controlling. The control unit can be located anywhere suitable within the robot.

As shown in Figure 4, the robot has logical units 30 (head), 40 (torso), and 50R/L and 60R/L each representing the corresponding one of four human limbs. The degrees-of-freedom of the robot 100 shown in Fig. 3 are implemented by the corresponding actuator within each unit. Hence the head unit 30 has a neck-joint yaw-axis actuator A2, a neck-joint pitch-axis actuator A3, and a neck-joint roll-axis actuator A4 disposed therein for representing the neck-joint yaw-axis 2, the neck-joint pitch-axis 3, and the neck-joint roll-axis 4, respectively. Meanwhile the trunk unit 40 has a trunk pitch-axis actuator A5, a trunk roll-axis actuator A6, and a trunk yaw-axis actuator A7 disposed therein for representing the trunk pitch-axis 5, the trunk roll-axis 6, and the trunk yaw-axis 7, respectively. Similarly the arm units 50R/L are broken down into upper-arm units 51R/L, elbow-joint units 52R/L, and forearm units 53R/L. Each of the arm units 50R/L has a shoulder-joint pitch-axis actuator A8, a shoulder-joint roll-axis actuator A9, an upper-arm yaw-axis actuator A10, an elbow-joint pitch-axis actuator A11, an elbow-joint roll-axis actuator A12, a wrist-joint pitch-axis actuator A13, and a wrist-joint roll-axis actuator A14 disposed therein for representing the shoulder-joint pitch-axis 8, the shoulder-joint roll-axis 9, the upper-arm yaw-axis 10, the elbow-joint pitch-axis 11, an elbow-joint roll-axis 12, the wrist-joint pitch-axis 13, and the wrist-joint roll-axis 14, respectively. Finally the leg units 60R/L are broken down into thigh units 61R/L, knee units 62R/L, and second-thigh units 63R/L. Each of the leg units 60 R/L has a hip-joint yaw-axis actuator A16, a hip-joint pitch-axis actuator A17, a hip-joint roll-axis actuator A18, a knee-joint pitch-axis actuator A19, an ankle-joint pitch-axis actuator A20, and an ankle-joint roll-axis actuator A21 disposed therein for representing the hip-joint yaw-axis 16, the hip-joint pitch-axis 17, the hip-joint roll-axis 18, the knee-joint pitch-axis 19, the ankle-joint pitch-axis 20, and the ankle-joint roll-axis 21, respectively. Optionally the head unit 30, the trunk unit 40, the arm units 50, and the leg units 60 may have sub-controllers 35, 45, 55, and 65 for driving the corresponding actuators disposed therein.

Hence by issuing appropriate commands, the main controller (81) can control the driving of the joint actuators included in the robot 100 to implement the desired action. For example, the controller may implement a walking action by implementing successive phases, as follows:
(1) Single support phase (left leg) with the right leg off the walking surface;
(2) Double support phase with the right foot touching the walking surface;
(3) Single support phase (right leg) with the left leg off the walking surface; and
(4) Double support phase with the left foot touching the walking surface.

Each phase in turn comprises the control of a plurality of actuators, both within the relevant leg and potentially elsewhere in the robot, for example moving the opposing arm and/or attitude of the torso to maintain the centre of gravity of the robot over the supporting foot or feet.

Optionally, to detect the manner and/or extent of a physical interaction with an object and/or the environment, physical sensors may be provided.

Hence in the exemplary robot, the feet 22 have grounding detection sensors 91 and 92 (e.g. a proximity sensor or microswitch) for detecting the grounding of the feet 22 mounted on legs 60R and 60L respectively, and the torso is provided with an attitude sensor 93 (e.g. an acceleration sensor and/or a gyro-sensor) for measuring the trunk attitude. Outputs of the grounding detection sensors 91 and 92 are used to determine whether each of the right and left legs is in a standing state or a swinging state during the walking action, whilst an output of the attitude sensor 93 is used to detect an inclination and an attitude of the trunk. Other sensors may also be provided, for example on a gripping component of the robot, to detect that an object is being held.

The robot may also be equipped with sensors to provide additional senses. Hence for example the robot may be equipped with one or more cameras, enabling the control unit (or a remote system to which sensor-based data is sent) to recognise a user of the robot, or a target object for retrieval. Similarly one or more microphones may be provided to enable voice control or interaction by a user. Any other suitable sensor may be provided, according to the robot's intended purpose. For example, a security robot intended to patrol a property may include heat and smoke sensors, and GPS.

Hence more generally, a robot platform may comprise any suitable form factor and comprise those degrees of freedom necessary to perform an intended task or tasks, achieved by the use of corresponding actuators that respond to control signals from a local or remote controller that in turn operates under suitable software instruction to generate a series of control signals corresponding to a performance of the intended task(s).

In order to provide software instruction to generate such control signals, a robot software development system may be provided for developing control sequences for desired actions, and/or for developing decision making logic to enable the robot control system to respond to user commands and/or environmental features.

As part of this development system, a virtual robot (i.e. a simulation) may be used in order to simplify the process of implementing test software (for example by avoiding the need to embed test software within robot hardware that may not have simple user-serviceable parts, or to simulate an environment or action where a mistake in the software could damage a real robot). The virtual robot may be characterised by the dimensions and degrees of freedom of the robot, etc., and an interpreter or API operable to respond to control signals to adjust the state of the virtual robot accordingly.

Control software and/or scripts to use with such software may then be developed using, and to use, any suitable techniques, including rule based / procedural methods, and/or machine learning / neural network based methods.

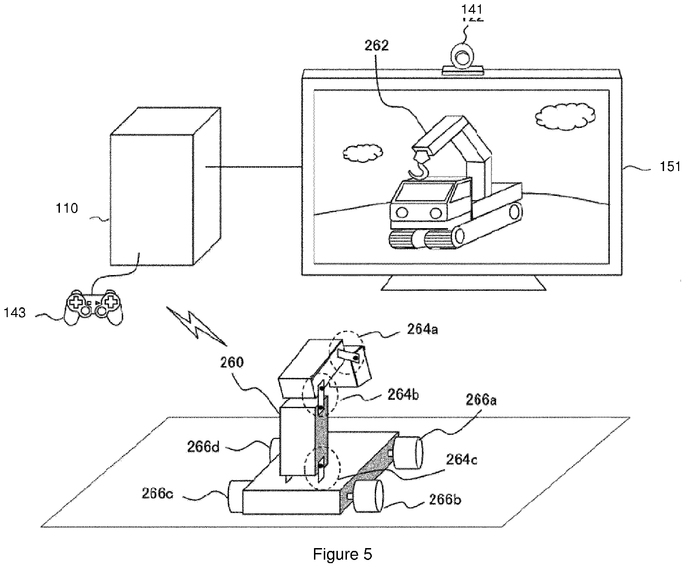

Referring to Figure 5, in an exemplary usage scenario a (toy) real robot crane 260 and a corresponding simulation (virtual robot crane 262) interact for entertainment purposes, for example mirroring each other's actions or behaving in a complementary manner, and/or using sensor data from the real or virtual robot to control actions of the other. The virtual robot may be graphically embellished compared to the real robot, for example having a face, or resembling an object or creature only approximated by the real robot.

In this example, the robot platform 260 has motorised wheels 266a-d and one articulated arm with actuators 264a-c. However it will be appreciated that any suitable form factor may be chosen, such as for example the humanoid robot 100 of Figure 1, or a dog-shaped robot (not shown) or a spheroidal robot (not shown).

In Figure 5, control of both the virtual and real robots is performed by a general purpose computer (110) operating under suitable software instructions, such as the Sony® PlayStation 4®. A user can interact with the PlayStation and hence optionally indirectly interact with one or both of the real and virtual robots using any suitable interface, such as a videogame controller 143. The PlayStation can detect the state of the real robot by receiving telemetry and other status data from the robot, and/or from analysis of an image of the real robot captured by a video camera 141. Alternatively or in addition the PlayStation can assume the state of the real robot based on expected outcomes of the commands sent to it. Hence for example, the PlayStation may analyse captured images of the real robot in expected final poses to determine its positon and orientation, but assume the state of the robot during intermediate states such as transitions between poses.

In the example scenario, the user provides inputs to control the real robot via the PlayStation (for example indicating an amount and direction of travel with one joystick, and a vertical and horizontal position of the arm end with another joystick). These inputs are interpreted by the PlayStation into control signals for the robot. Meanwhile the virtual simulation of the robot may also be controlled in a corresponding or complementary manner using the simulation technique described above, according to the mode of play.

Alternatively or in addition, the user may directly control the real robot via its own interface or by direct manipulation, and the state of the robot may be detected by the PlayStation (e.g. via image analysis and/or telemetry data from the robot as described previously) and used to set a corresponding state of the virtual robot.

It will be appreciated that the virtual robot may not be displayed at all, but may merely act as a proxy for the real robot within a virtual environment. Hence for example the image of the real robot may be extracted from a captured video image and embedded within a generated virtual environment in an augmented reality application, and then actions of the real robot can be made to appear to have an effect in the virtual environment by virtue of those interactions occurring with a corresponding virtual robot in the environment mirroring the state of the real robot.

Alternatively, a virtual robot may not be used at all, and the PlayStation may simply provide control and/or state analysis for the real robot. Hence for example the PlayStation may monitor the robot via the camera, and cause it to pick up a ball or other target object placed within the camera's field of view by the user.

Hence more generally, a robot platform may interact with a general purpose computer such as the Sony ® PlayStation 4 ® to obtain a series of control signals relating to setting a state of the robot, for the purposes of control by a user and/or control by the PlayStation to achieve a predetermined task or goal. Optionally the state, task or goal may be at least in part defined within or in response to a virtual environment, and may make use of a simulation of the robot.

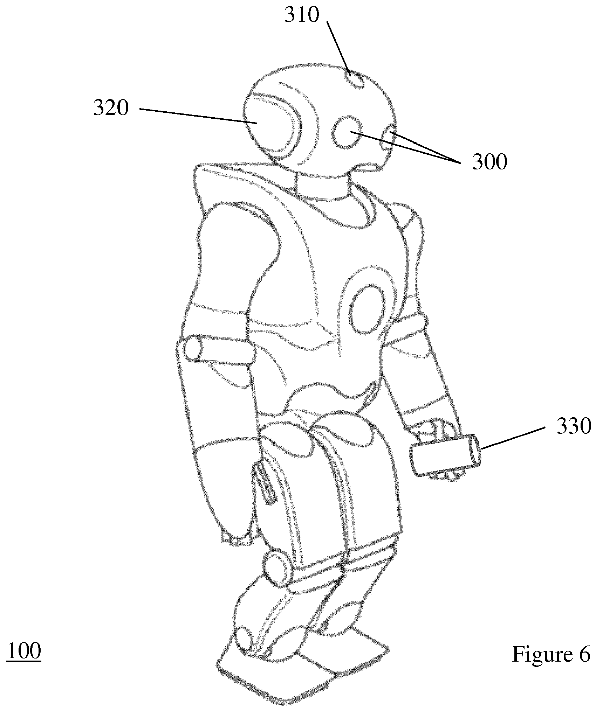

In embodiments of the present application, a robot is provided with cameras in order to be able to view the surrounding environment, and apparatus for allowing the emission of light. Figure 6 schematically illustrates such a robot; while a humanoid robot is shown here, of course the teachings of the present application may be applied to robots of any form. For example, the robot 260 of Figure 5 could be provided with one or more cameras, an apparatus for allowing the emission of light, and suitable processing apparatus.

It is anticipated that such an arrangement may lead to enhanced interactions between a user and a robot, and as such may enable a sufficiently simple and intuitive teaching tool. This may therefore enable environment-specific teaching, reducing the burden on designers and developers of the robot by reducing the amount of data (such as object-recognition data) that needs to be provided with the robot. Further to this, the robot may be more adaptive and therefore robust when introduced to new environments or the like.

The robot 100 of Figure 6 comprises a pair of cameras 300, an inbuilt light emission unit 310, audio sensor 320, and a peripheral light emission unit 330. While each of these components are shown as being comprised as a part of the robot, it is envisaged that they may be remote from the robot - for example, the cameras may be located elsewhere in the environment so as to increase the field of view.

The cameras 300 are shown as being in the position of the robot's 'eyes' (in this instance, a location in which a user would expect the eyes to be if the robot were actually a human); while this may be preferable in that it may be easy to determine a gaze direction of a robot, of course the cameras may be located elsewhere.

The cameras 300 may act together to generate a stereoscopic view of the environment about the robot 100, or may each comprise stereoscopic cameras. The cameras 300 may be independently actuable, or may be configured to move together (for example, so as to preserve the stereo view). Stereoscopic imaging may be useful in that it is possible to determine the depth of objects in the captured images (that is, how far away objects in the environment are from the robot 100); however, any suitable arrangement may be used to replace or supplement stereoscopic cameras. For example, a depth camera, echolocation, or a rangefinder may be used instead of or as well as a stereoscopic imaging arrangement.

As noted above, the cameras 300 may be located apart from the robot as this may offer an improved view of the environment. In some embodiments, the view of the robot-mounted cameras 300 may be supplemented with views from cameras located remotely from the robot 100. This may enable an improved view of the environment, whilst reducing the impact of occlusions caused by the motion of the robot 100 (for example).

The inbuilt light emission unit 310 is operable to output light that may be visible to a user associated with the robot 100. For example, the light emission unit 310 may comprise a laser, LED, projector, or any other suitable light-emitting apparatus for outputting a predetermined illumination. The light emission unit 310 may be actuable (for example, mounted using one or more actuators) so as to be able to illuminate objects in a range of locations relative to the robot 100, rather than only being able to illuminate objects in the direction in which the robot's 100 head is oriented.

In some embodiments, a laser is used as a simple method of illuminating an object in the environment (or a part of the robot itself). A predetermined frequency/wavelength of the light emission may be used so as to facilitate detection of the illumination of an object. Alternatively, or in addition, a projector may be used that is operable to project a particular predetermined pattern (such as an AR marker) onto an object in the environment. Such a pattern may be recognisable by the camera, and may be used to indicate a particular function or to assist in identifying the distance of the illuminated object from the robot.

The audio sensor 320, such as a microphone or microphone array, may be used to capture sounds in the environment. This may be useful in a number of exemplary manners; for example, identifying/classifying objects based upon the sounds that they emit, locating objects in an echolocation-based arrangement, or for receiving voice commands from a user.

The peripheral light emission unit 330 provides comparable functionality to that of the inbuilt light emission unit 310, although by providing it as a separate unit it is possible that the peripheral light emission unit 330 may be able to be used to illuminate objects in a larger area (for example, using arm motion/wrist motion to achieve greater coverage of the environment). In arrangements in which inbuilt light emission units 310 are not provided, the peripheral light emission unit 330 may be a simple way of adding such functionality and enabling it to be shared by allowing the unit 330 to be passed between a plurality of robots.

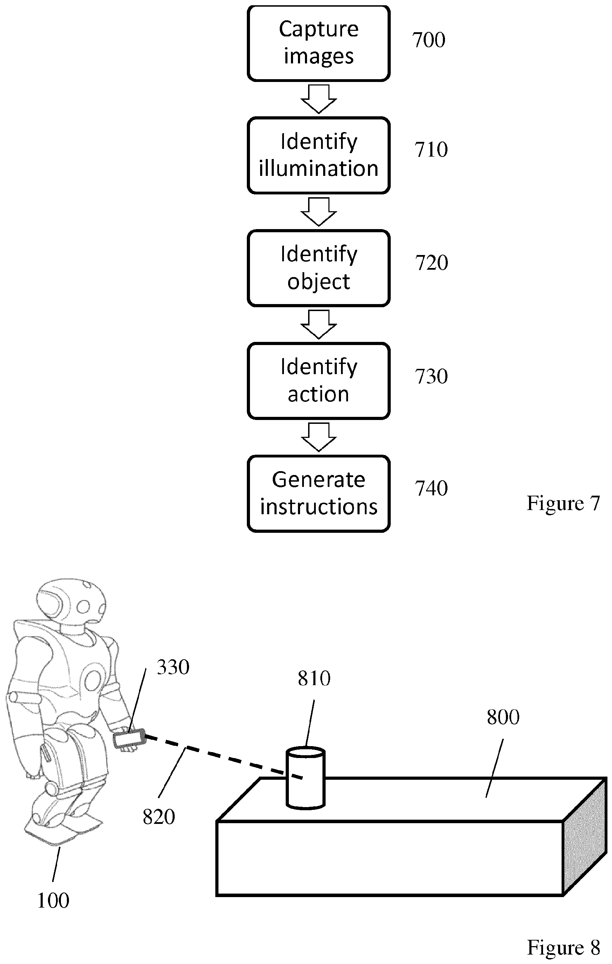

Figure 7 schematically illustrates a method for generating instructions for a robot. While a number of different steps are shown here, it is possible that in a number of embodiments one or more of the steps may be omitted or additional steps may be performed.

A step 700 comprises capturing images of an environment comprising the robot. This may be performed using cameras located at the robot, or remote cameras located elsewhere in the environment. The step 700 may further comprise gathering additional information about the environment, such as capturing audio or identifying depth information for one or more objects in the environment.

A step 710 comprises identifying an illumination of an object in the captured images. For example, this may comprise performing image processing on the captured images in order to identify a particular colour (corresponding to the wavelength of light of a laser used to illuminate objects), optionally in conjunction with a region of relative brightness within the image, or to identify a pattern in the image that may be used to illuminate objects. Of course, any other suitable detection method may be utilised.

A step 720 comprises identifying an illuminated object. This may comprise an object recognition process so as to be able to label the object (for example, identifying a table as being a table), or it may simply result in a determination of the size and/or shape of an object. For example, the identification 720 may comprise performing an edge detection in an image so as to determine the boundaries of the illuminated or partially illuminated object. Following this, the step 720 may then comprise either calculating dimensions of the object based upon this or performing a template-matching process, for example.

In some embodiments, the robot may be operable to interact with the object to help identify it rather than relying on captured images or the like. For example, the robot may be operable to pick up the object to determine its mass, or to rotate the object in order to view other sides. In some embodiments, the robot may be able to tap the object and record sounds; this may assist in identifying the material of the object and whether or not it is hollow or solid (or empty/full, for containers).

A step 730 comprises identifying an action to be performed; any suitable action may be identified in this step. Examples of actions include storing information about the object for future use (such that the robot is able to learn what an object is), moving an object, or simply monitoring an object.

The actions may be identified in a number of ways. In some embodiments, the action is identified based upon a user input (either at the time of the step 730 or before) or an operation mode of the robot. Alternatively, or in addition, the action may be identified based upon the illumination that is identified (for example, based upon illumination colour or the marker shape); as a further alternative or additional method, the action may be identified in dependence upon the object itself. Of course, it may be possible that no action is identified.

A step 740 comprises generating instructions for a robot in dependence upon the identification of the illuminated object in the step 720, and/or the identification of the action in the step 730.

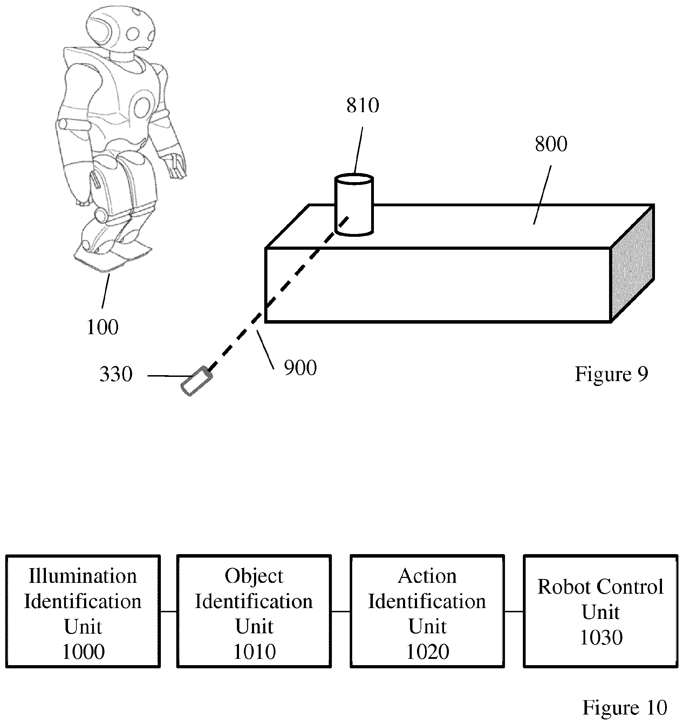

Exemplary embodiments according to the method of Figure 7 are discussed below with references to Figures 8 and 9. Of course, modifications may be made to the exemplary implementations discussed below and as such these examples should not be considered limiting.

A number of the identification steps may be improved by using supplementary data about the environment. For example, context information about the environment (such as whether it is the kitchen or living room, or indoor/outdoor) may assist in performing object recognition if certain objects are associated with different environments. Alternatively, or in addition, pre-existing (or generated by the robot) mapping data (such as data derived using a SLAM method) may be used to more accurately map the environment. This may assist in identifying the position and scale of objects within the environment, for example.

Figure 8 schematically illustrates an embodiment in which the robot 100 operates the light emission unit 330 to illuminate the object 810 (via light 820) located on surface 800. This is an example in which the robot performs an illumination prior to the step 700 of Figure 7.

The robot 100 is operable to capture images of the environment, identifying the light 820 in those images. The following steps may be varied in dependence upon the function that is being performed by the robot 100 in Figure 8. Three examples are provided below, each of which may be used alone or in conjunction with each other and may be implemented in any suitable embodiments of the present application.

In a first example, the robot 100 is in a training mode, and has illuminated the object 810 as it does not recognise this object. The object identification in this case simply comprises the step of locating the size and/or shape of the object 810, for example using edge detection in the captured images. An associated action may be then determined; for such an object, the action may be to request identification by a human user or to download further data packs that may contain information identifying the object.

In view of this, instructions are generated that may be implemented to cause the robot to audibly (or visually) request input from a user - for example, to name the object, select the object type from a list, or to identify a webpage or the like that contains a product listing identifying the item. Alternatively, or in addition, instructions may be generated that cause the robot to access online repositories of information in order to search for information about the object so as to perform an identification without user input.

An example scenario for such a use would be for a care or assistance robot for a disabled user; a video image from one or more of the robots cameras and/or optionally a separate camera within the environment may be relayed to a device controllable by the user, and which is operable to communicate with the robot (e.g. via Bluetooth ® or via a WiFi ® link). The user may cause the robot to move into the vicinity of the object 810 by any suitable means, such as pressing a 'go to the kitchen' button on the device, or issuing a verbal command, or directly controlling the direction of movement of the robot using a joystick or similar. Once within the vicinity of the object 810, optionally the user may control where the light emission unit is pointing, so as to highlight the intended object, for example by using a joystick, or by tapping on a touchscreen of the control device showing the current view from the robot camera. In this way, depending on the users current need, they could highlight a cup, an apple, a plate, an oven control, or any other item of interest using the light. Then as described herein robot can be instructed to reach the object 810. In one mode, the user may then simply provide control for how to interact with the object I that single instance. Meanwhile in a training mode, then such controls may be recorded for future interaction with the object by the robot, or as noted above instructions for interaction with that object may be downloaded, and optionally associated with whatever image and/or location data has been captured by the robot to identify the object in future. In this way, a user can identify to a robot objects of relevance for current and future interactions in a simple and intuitive manner, and instructions for appropriate interaction with the object can be obtained.

In a second example, the robot is operable to identify the object 810. For instance, the robot may recognise the object 810 as a cup (for example, based upon image recognition). An associated action may then be identified - for example, the robot may understand that cups that have not been used for a predetermined amount of time should be placed in a dishwasher (such an embodiment may require monitoring of objects, which is another action that may be identified). Instructions may then be generated that would cause the robot to pick up the cup and move it to the dishwasher.

In a third example, a user has requested that the robot bring them the object 810 (or otherwise interact with the object 810). In this example, the robot may be operable to locate the object 810 in captured images of the environment. Then, the robot may be operable to illuminate the object 810 with the light 820. Capturing further images and identifying the illumination in those images enables the robot to ensure that it has illuminated the object 810 (by identifying the illuminated object to be the object 810). The identified action in this case would be that of seeking confirmation from the user that the correct object is being identified for interaction, and as such instructions may be generated that cause the robot to seek a confirmation from the user.

These three examples each provide different implementations of the method of Figure 7.

Figure 9 schematically illustrates an embodiment in which a user operates the light emission unit 330 directly (e.g. by using a hand-held light emission unit, or controlling a separate light emission unit such as a wall-mounted unit). This may be the same light emission unit 330 as is utilised by the robot 100, or it may be a separate device. In embodiments in which the user operates the light emission unit 330, the user is able to indicate objects of interest by illuminating them. The user may also be able to indicate actions to be performed by the robot in dependence upon the illumination; for example, different colours and/or patterns may each be linked to a different action to be performed. Alternatively or in addition, as noted herein, the user may interact with a control device to indicate interactions.

In some examples, the user has a light emission unit 330 for their dedicated use. In other embodiments the light emission unit 330 is shared, and the robot 100 may be controllable (via voice command, for example) to give the light emission unit 330 to the user. In some embodiments, multiple light emission units 330 may be available and so combinations of these examples may be utilised.

In Figure 9, it is considered that the user uses the light emission unit 330 to illuminate the object 810 with light 900. The robot 100 may then capture images of the environment, and identify the illumination in the captured images, before proceeding with the rest of the steps of the method of Figure 7.

As a first example, the arrangement of Figure 9 may be used in the context of a training mode that enables a robot to be taught the names, characteristics, or actions to be associated with a particular object. In this case, the illuminated object is identified in terms of its shape and/or size. The identified action may be 'learning the object' (based upon the operation mode of the robot 100), and as such instructions may be generated that cause the robot 100 to store information about the object 810 (such as a template to use for recognition of the object later) along with an identifier (such as a name). A user may provide a voice input to be linked to the object, such that the robot 100 may learn to associate a particular voice input with the object 810.

As a second example, the user may have commanded the robot to perform a 'fetch' command, or the like. The robot is then operable to capture images of the environment, and to identify an illumination in the environment. The illuminated object 810 may then be identified as the object of interest, and the action of fetching may be identified (based upon previously-received instructions). Instructions are then generated to cause the robot 100 to approach the object 810, pick it up, and give it to the user.

Hence in this example, a user can illuminate an object, and the robot can then fetch it for them (for example, the user can point a light at the desired object, and then press a 'fetch' button on the light emission device or on another control device. Meanwhile, as noted previously herein, where the object is in a different room or otherwise out of the line of sight of the user (or their light emission unit), then video streamed from the robot may be used to enable the user to identify the object of interest, either by controlling a light emission unit on the robot, and/or by identifying / tapping an object within the streamed video.

In these (and other) examples, the function that is to be performed by the robot 100 may be communicated based upon the illumination itself. For example, the light emission unit 330 may be operable to generate light of different colours, or to project different patterns or the like, that may each be linked to different functions. For example, a red light being used could indicate a fetch command while a blue light being used could indicate a tidying command. In some embodiments, the pattern is a spatial pattern while in others it may be temporal (such as a particular sequence of on/off and/or varying brightness), or a combination of the two. Clearly however, a separate communication path such as Bluetooth ® or Wifi ® may be used to convey commands to the robot). This may be of help for example if trying to use a 'red' command light when illuminating a green object, which may not be simple for the robot to interpret. It also serves to simplify the light emitting system.

Of course, many other examples of implementations in which the method of Figure 7 is implemented with a user-controlled light emission unit 330 are possible, and any of these examples may be used instead of or in conjunction with one another. As noted above, in some embodiments both the user and the robot 100 may be able to use light emission units 330 in order to communicate. For example, any of the methods described above may be supplemented with the use of a light emission unit 330 by the other party to act as a confirmation (such as, 'yes, this is the correct object').

Figure 10 schematically illustrates a hardware arrangement according to the present application, operable to implement the method of Figure 7. This comprises an illumination identification unit 1000, an object identification unit 1010, an action identification unit 1020 and a robot control unit 1030. While these are all shown as being formed as a single unit, the functionality may be divided between any number of devices, such as a robot and an associated processing device (such as a games console, tablet, phone, or personal computer).

Additional hardware may be provided in conjunction with the units shown, such as one or more cameras operable to capture images of an environment comprising the robot, or a wall mounted controllable light emission unit; it is also considered that one or more of the units may be omitted from an arrangement according to the present disclosure.

The illumination identification unit 1000 is operable to identify an illumination of an object in the captured images.

The object identification unit 1010 is operable to identify an illuminated object.

The action identification unit 1020 is operable to identify an action to be performed by the robot.

The robot control unit 1030 is operable to generate instructions for a robot in dependence upon the output of the object identification unit. In some embodiments, the robot control unit 1030 is operable to generate instructions in dependence upon the identified action (as identified by the action identification unit 1020).

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

## Claims

1. A system for generating instructions for a robot, the system comprising:
one or more cameras operable to capture images of an environment comprising the robot;
an illumination identification unit operable to identify a predetermined illumination of an object in the captured images;
an object identification unit operable to identify an illuminated object; and
a robot control unit operable to generate instructions for a robot in dependence upon the output of the object identification unit.

2. A system according to claim 1, comprising an action identification unit operable to identify an action to be performed by the robot,
wherein the robot control unit is operable to generate instructions in dependence upon the identified action.

3. A system according to claim 1, comprising one or more audio sensors.

4. A system according to claim 1, comprising one or more light emission units operable by the robot to illuminate objects.

5. A system according to claim 1, comprising one or more light emission units operable by a user to illuminate objects.

6. A system according to claim 1, wherein the robot control unit is operable to generate instructions in dependence upon the identified illumination.

7. A system according to claim 6, wherein the illumination comprises one or more patterns.

8. A system according to claim 1, wherein the object identification unit is operable to characterise an illuminated object by its size and/or shape.

9. A system according to claim 1, wherein the robot control unit is operable to generate instructions to cause the robot to interact with the illuminated object so as to obtain more information usable to characterise the illuminated object.

10. A system according to claim 1, wherein the robot control unit is operable to generate instructions to cause the robot to store information relating to the illuminated object.

11. A system according to claim 10, wherein the information comprises a template of the illuminated object and/or an audio command associated with the illuminated object.

12. A system according to claim 1, wherein the robot control unit is operable to generate instructions to cause the robot to interact with the illuminated object to perform a function.

13. A method for generating instructions for a robot, the method comprising:
capturing images of an environment comprising the robot;
identifying a predetermined illumination of an object in the captured images;
identifying an illuminated object; and
generating instructions for a robot in dependence upon the identification of the illuminated object.

14. Computer software which, when executed by a computer, causes the computer to carry out the method of claim 13.

15. A non-transitory machine-readable storage medium which stores computer software according to claim 14.
